# EUROPEAN PATENT APPLICATION

(11) **EP 4 390 313 A1**
(43) Date of publication of application: **26.06.2024**
(21) Application number: 22857242.6
(22) Date of filing: 09.03.2022
(51) Int. Cl.: G01C 21/00

(54) **NAVIGATION METHOD AND SELF-PROPELLED APPARATUS**

(30) Priority: 20.08.2021 CN 202110963412
(71) Applicant: Beijing Roborock Innovation Technology Co., Ltd., Beijing 102206 (CN)
(72) Inventor: SONG, Jian, Beijing 102206 (CN); ZHU, Hai, Beijing 102206 (CN); WANG, Lei, Beijing 102206 (CN)
(74) Representative: Studio Torta S.p.A.
(86) International application number: PCT/CN2022/080015
(87) International publication number: WO 2023/019922

(57) **Abstract**

Disclosed are a navigation method and a self-propelled apparatus, which relate to the technical field of self-propelled apparatuses. The navigation method is applied to the self-propelled apparatus, and comprises: once a current job task is complete, determining a travel region to be supplemented (S220); determining whether there is a reachable position adjacent to the travel region (S240); and in response to the presence of the reachable position adjacent to the travel region, controlling the self-propelled apparatus to reach the reachable position, and controlling the self-propelled apparatus to try to enter the travel region so as to perform a job in the travel region (S260).

## Description

### CROSS-REFERENCE TO RELATED APPLICATION

This application claims priority to Chinese Patent Application No. 202110963412.5, filed on August 20,2021, which is incorporated herein by reference in its entirety as a part of the present application.

### TECHNICAL FIELD

The present disclosure relates to the field of self-walking devices, specifically to a navigation method and a self-walking device, and more particularly to a navigation method for a self-walking device and a self-walking device using the navigation method.

### BACKGROUND

With the development of technologies, various intelligent self-walking devices have emerged, such as a sweeping robot, a mopping robot, a vacuum cleaner, and a weeding machine. These robots can automatically recognize a sweeping route and select a sweeping mode based on the sweeping route, which not only frees laborers, but also reduces labor costs.

### SUMMARY

Some embodiments of the present disclosure provide a navigation method applied to a self-walking device, the method including:
determining a candidate region after a current task is completed;
determining whether a reachable position adjacent to the candidate region exists; and
controlling, in response to an existence of the reachable position adjacent to the candidate region, the self-walking device to reach the reachable position, and controlling the self-walking device to attempt to enter the candidate region to operate in the candidate region.

In some embodiments, the navigation method further includes: controlling, in response to an absence of the reachable position adjacent to the candidate region, the self-walking device to give up entering the candidate region.

In some embodiments, determining the candidate region includes: determining the candidate region based on data information, the data information including environmental data information acquired by the self-walking device during a completion of the current task; and in response to determining, based on the acquired environmental data information, that an obstacle is a passable obstacle and that the obstacle is located at a boundary of a travelled region reached by the self-walking device in the current task, determining a side, facing away from the travelled region, of the obstacle as the candidate region.

In some embodiments, the environmental data information includes at least one or any combination of: structured light point cloud information, laser ranging information, and image information.

In some embodiments, determining the candidate region includes: determining the candidate region based on data information, the data information including data information of a historical task recorded by the self-walking device, and the data information of the historical task including historical map information and/or historical navigation information; and in response to determining, based on the data information of the historical task, that a travelled region reached in the current task does not include one or more partial regions of regions reached in the historical task, determining the one or more partial regions as candidate regions.

In some embodiments, determining whether the reachable position adjacent to the candidate region exists includes: determining an adjoining portion, which adjoins the candidate region, of the travelled region, and determining, in response to a junction of the adjoining portion and the candidate region having only the passable obstacle, the adjoining portion as the reachable position.

In some embodiments, controlling the self-walking device to reach the reachable position and controlling the self-walking device to attempt to enter the candidate region includes: ignoring the passable obstacle at the junction of the reachable position and the candidate region, and controlling the self-walking device to pass the junction of the reachable position and the candidate region and to travel towards the candidate region.

In some embodiments, the passable obstacle includes a doorsill and/or a carpet edge.

In some embodiments, in response to an existence of a plurality of reachable positions, a reachable position is selected according to a predetermined order, and the self-walking device is controlled to attempt to enter the candidate region.

Some embodiments of the present disclosure provide a navigation device applied to a self-walking device. The navigation device includes:
a candidate region determining unit configured to determine a candidate region after the self-walking device completes a current task;
a reachable position determining unit configured to determine whether a reachable position adjacent to the candidate region exists; and
a control unit configured to control, in response to an existence of the reachable position adjacent to the candidate region, the self-walking device to reach the reachable position, and control the self-walking device to attempt to enter the candidate region to operate in the candidate region.

In some embodiments, the control unit is further configured to: control, in response to an absence of the reachable position adjacent to the candidate region, the self-walking device to give up entering the candidate region.

In some embodiments, determining the candidate region includes: determining the candidate region based on data information, the data information including environmental data information acquired by the self-walking device during a completion of the current task; and
the candidate region determining unit is configured to: in response to determining, based on the acquired environmental data information, that an obstacle is a passable obstacle and that the obstacle is located at a boundary of a travelled region reached by the self-walking device in the current task, determine a side, facing away from the travelled region, of the obstacle as the candidate region.

In some embodiments, the environmental data information includes at least one or any combination of: structured light point cloud information, laser ranging information, and image information.

In some embodiments, determining the candidate region includes: determining the candidate region based on data information, the data information including data information of a historical task recorded by the self-walking device, and the data information of the historical task including historical map information and/or historical navigation information; and
the candidate region determining unit is configured to: in response to determining, based on the data information of the historical task, that a travelled region reached in the current task does not include one or more partial regions of regions reached in the historical task, determine the one or more partial regions as candidate regions.

In some embodiments, the reachable position determining unit is configured to: determine an adjoining portion, which adjoins the candidate region, of the travelled region, and determine, in response to a junction of the adjoining portion and the candidate region having only the passable obstacle, the adjoining portion as the reachable position.

In some embodiments, the control unit is configured to: ignore the passable obstacle at the junction of the reachable position and the candidate region, and control the self-walking device to pass the junction of the reachable position and the candidate region and to travel towards the candidate region.

In some embodiments, the passable obstacle includes a doorsill and/or a carpet edge.

In some embodiments, in response to an existence of a plurality of reachable positions, the control unit is configured to: select a reachable position according to a predetermined order, and control the self-walking device to attempt to enter the candidate region.

Some embodiments of the present disclosure provide a self-walking device including a processor and a memory. The memory stores a computer program instruction executable by the processor. The processor, when executing the computer program instruction, implements the steps of the foregoing method.

Some embodiments of the present disclosure provide a non-transitory computer-readable storage medium storing a computer program instruction. The computer program instruction, when invoked and executed by a processor, causes the processor to implement the steps of the method according to the foregoing embodiments.

Compared with the related art, the foregoing solutions in the embodiments of the present disclosure have at least the following beneficial effects.

In the navigation method for the self-walking device, for example, a sweeping robot, a supplementary to-be-swept region is detected based on environmental data information and/or data information of a historical task, and whether the supplementary to-be-swept region is reachable is determined. This provides reference for a subsequent sweeping operation, thereby increasing sweeping coverage.

### BRIEF DESCRIPTION OF THE DRAWINGS

The accompanying drawings herein, which are incorporated into the Description and constitute a part of the Description, illustrate embodiments that conform to the present disclosure and are used together with the Description to explain principles of the present disclosure. Apparently, the accompanying drawings in the following description show merely some of the embodiments of the present disclosure, and those of ordinary skill in the art may still without creative efforts derive other accompanying drawings from these accompanying drawings. In the drawings:
FIG. 1 is a schematic structural diagram of a self-walking device according to some embodiments of the present disclosure.
FIG. 2 is a flowchart of a navigation method applied to a self-walking device according to some embodiments of the present disclosure.
FIG. 3 is a scenario diagram of a navigation method applied to a self-walking device according to some embodiments of the present disclosure.
FIG. 4 is a schematic diagram of a control device of a self-walking device according to some embodiments of the present disclosure.
FIG. 5 is a schematic diagram of an electronic structure of a self-walking device according to some embodiments of the present disclosure.

### DETAILED DESCRIPTION

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by those of ordinary skill in the art based on the embodiments of the present disclosure without creative efforts should fall within the protection scope of the present disclosure.

It should also be noted that, the terms "comprising/including", "containing", or any other variants thereof are intended to cover the nonexclusive inclusion, such that a commodity or device including a series of elements includes not only those elements, but also other elements not listed explicitly or elements inherent to such a commodity or device. Without more limitations, the element defined by the phrase "including a" does not exclude the existence of other same elements in the commodity or device including the element.

A self-walking device, for example, a sweeping robot may use a differential chassis, and may perform environmental perception by using one or more sensors such as a camera, a depth imaging apparatus, a laser distance sensor (LDS), an odometer, and an inertial measurement unit (IMU). For a non-random collision sweeping robot, software of the sweeping robot performs, based on sensor data, operations such as simultaneous localization and mapping (SLAM), depth estimation, and obstacle detection, so as to obtain information about a position map and an obstacle that are required for navigation. Therefore, functions such as obstacle avoidance are avoided.

When the sweeping robot performs a sweeping operation, especially when an obstacle avoidance function of the sweeping robot is inadequate, the sweeping robot may collide with furniture and a small obstacle. In this case, collision of the sweeping robot easily causes damage to the furniture. Moreover, unplanned movement caused by the collision also easily makes the sweeping robot trapped or damaged, affecting implementation of sweeping. The present disclosure proposes a solution in which a depth sensor capable of observing an obstacle, for example a dual-line structured light, is placed at a front end of a sweeping machine to observe an environment, thereby achieving collision avoidance.

For an obstacle avoidance manner of the depth sensor, the following problem may occur in a collision-avoiding mode. Because the depth sensor cannot determine an obstacle in front of the depth sensor, in obstacle detection performed based on a single observation of the depth sensor, a doorsill, a carpet edge and the like may be regarded as obstacles that are to be avoided. As a result, sweeping of a room behind the doorsill and a carpet region is skipped. This greatly reduces the sweeping efficiency.

The present disclosure provides a navigation method applied to a self-walking device, for example a sweeping robot. The navigation method includes at least the following steps:
determining a candidate region after a current task is completed;
determining whether a reachable position adjacent to the candidate region exists; and
controlling, in response to an existence of the reachable position adjacent to the candidate region, the self-walking device to reach the reachable position, and controlling the self-walking device to attempt to enter the candidate region to operate in the candidate region.

In the navigation method in the present disclosure, i.e., the navigation method for the self-walking device, for example, the sweeping robot, a supplementary to-be-swept region is detected based on environmental data information and/or data information of a historical task, and whether the supplementary to-be-swept region is reachable is determined. This provides reference for a subsequent sweeping operation, thereby increasing sweeping coverage. The environmental data information includes, for example, at least one or any combination of structured light point cloud information, laser ranging information, and image information. The data information of the historical task includes historical map information and/or historical navigation information.

The following describe alternative embodiments of the present disclosure in detail with reference to the accompanying drawing.

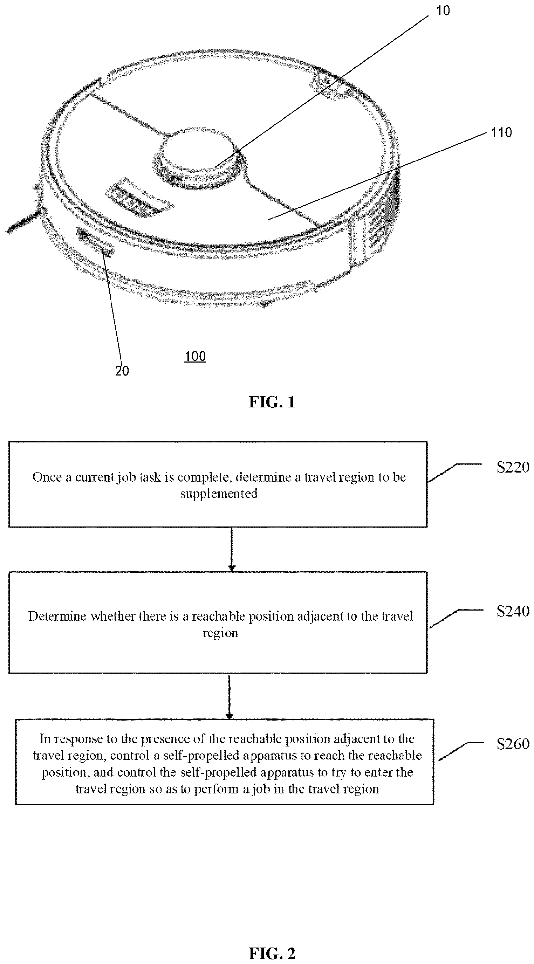

FIG. 1 is a schematic structural diagram of a self-walking device according to some embodiments of the present disclosure. As shown in FIG. 1, the self-walking device 100, for example a sweeping robot, includes a laser distance sensor (LDS) 10 located at the top of a sweeping robot body 110, and an image sensor 20 located on a side wall of the sweeping robot body 110. The image sensor 20 includes, for example, a structured-light imaging component. In addition, the image sensor 20 may further include a visible-light imaging component. The laser distance sensor 10 is configured to: detect an obstacle around the self-walking device, and detect a distance between the obstacle and the self-walking device 100, and is specifically configured to detect an obstacle higher than a body of the self-walking device 100. The image sensor 20 is configured to acquire an image of an obstacle that is in a travel direction of the self-walking device 100.

FIG. 2 is a flowchart of a navigation method applied to a self-walking device according to some embodiments of the present disclosure. As shown in FIG. 2, the navigation method includes the following steps.

In step S220, a candidate region is determined after a current task is completed.

The current task herein may be understood as a cleaning task performed once by the self-walking device 100, for example the sweeping robot according to a user's instruction, without contacting or colliding with an obstacle. Specifically, the self-walking device 100, for example the sweeping robot, uses a collision-avoiding mode when performing a cleaning operation, that is, bypasses an obstacle detected by the sweeping robot, so as to avoid damage to furniture and the like caused by collision of the sweeping robot and the furniture or a small obstacle, or to protect the sweeping robot from being trapped or damaged. Therefore, it is ensured that the sweeping robot can perform a sweeping operation smoothly. In this case, due to limited recognition precision and accuracy, the self-walking device 100 may regard a doorsill, a carpet edge and the like as obstacles and avoid them. As a result, sweeping of a room behind the doorsill, a carpet region and the like is skipped. However, the room behind the doorsill, the carpet region and the like are obviously regions that need to be swept. Therefore, it is necessary to recognize these regions and mark them as candidate regions. The candidate region may be a region that is avoided and not swept by the sweeping robot in the current task for avoiding contact or collision with an obstacle.

In step S240: whether a reachable position adjacent to the candidate region exists is determined.

Specifically, after the candidate region is determined, the self-walking device 100, for example, the sweeping robot, needs to determine whether there is a reachable position adjacent to the candidate region, that is, determine whether there is an entrance or a passage for entering the candidate region. The following step S260 may be performed if there is a reachable position adjacent to the candidate region. If there is no reachable position adjacent to the candidate region, the self-walking device 100 is controlled to give up entering the candidate region, that is, skip cleaning of the candidate region.

In step S260: in response to an existence of the reachable position adjacent to the candidate region, the self-walking device is controlled to reach the reachable position, and the self-walking device is controlled to attempt to enter the candidate region to operate in the candidate region.

Specifically, the self-walking device 100 is controlled to travel to the reachable position, and is controlled to attempt to enter the candidate region. If the self-walking device 100 enters the candidate region after one or more attempts, the self-walking device 100 performs a cleaning operation in the candidate region. If the self-walking device 100 still cannot enter the candidate region after one or more attempts, the self-walking device 100 is controlled to give up entering the candidate travel region, that is, to skip cleaning of the candidate region.

In some embodiments, in step S220, determining the candidate region includes: determining the candidate region based on data information, the data information including environmental data information acquired by the self-walking device during completion of the current task; and in response to determining, based on the environmental data information, that an obstacle is a passable obstacle and that the obstacle is located at a boundary of a travelled region reached by the self-walking device in the current task, determining a side, facing away from the travelled region, of the obstacle as the candidate region.

Specifically, the environmental data information includes at least one or any combination of: structured light point cloud information, laser ranging information, and image information. The structured light point cloud information is acquired by the structured-light imaging component in the image sensor 20. The laser ranging information is acquired by the LDS 10. The image information is acquired by the visible-light imaging component in the image sensor 20.

The self-walking device 100 may acquire information about the obstacle through the LDS 10 and the structured-light imaging component and the visible-light imaging component that are in the image sensor 20. The information is, for example, an outline of the obstacle, the distance between the obstacle and the self-walking device 100, and the like, and also belongs to the environmental data information. Specifically, the self-walking device 100 may acquire information about an obstacle in the surrounding environment of the self-walking device through the LDS 10, especially information about an obstacle higher than the body of the self-walking device 100, for example, including information about a distance between each point on the obstacle and the self-walking device 100. In this way, information about the outline of the obstacle and a positional relationship between the obstacle and the self-walking device 100 can be obtained. The self-walking device 100 may acquire structured light point cloud information of an obstacle in a travel direction of the self-walking device by using the structured-light imaging component in the image sensor 20. Even if the obstacle is lower than the body of the self-walking device 100, the structured-light imaging component can also detect the obstacle, and acquire structured light point cloud information of the obstacle. For example, the structured light point cloud information includes information about an outline and a form of the obstacle and information about a distance between the obstacle and the self-walking device 100. The self-walking device 100 may directly capture an image of the obstacle in the travel direction of the self-walking device by using the visible-light imaging component in the image sensor 20.

In a process of performing a cleaning operation in the collision-avoiding mode, the self-walking device 100 acquires information about an obstacle by using the LDS 10, and the structured-light imaging component and the visible-light imaging component that are in the image sensor 20, and bypasses the obstacle to perform the cleaning operation, thereby preventing the self-walking device 100 from colliding with the obstacle. After the self-walking device 100 completes the cleaning operation in the collision-avoiding mode, a region that has been cleaned is a travelled region. Subsequently, the self-walking device 100 determines, based on the environmental data information, for example, including the structured light point cloud information, the laser ranging information, and the image information that are of the obstacle and that are acquired by the self-walking device 100 in the process of performing the cleaning operation in the collision-avoiding mode, whether the obstacle is a passable obstacle, and whether the obstacle is located at the boundary of the travelled region reached by the self-walking device in the current task.

Specifically, a manner of determining whether the obstacle is a passable obstacle is as follows. When the obstacle can be detected by the LDS 10 of the self-walking device 100, that is, when the obstacle is higher than the body 110 of the self-walking device 100, the obstacle is determined as an impassable obstacle. This is because a doorsill, a carpet edge, and the like are generally not higher than the body 110 of the self-walking device 100. When the obstacle cannot be detected by the LDS 10 of the self-walking device 100, but can be detected by the structured-light imaging component or the visible-light imaging component of the self-walking device 100, and the height of the obstacle is lower than a first threshold, the obstacle is determined as a passable obstacle. The first threshold is, for example, less than the height of the body 110 of the self-walking device 100; or the first threshold is, for example, less than or equal to a terrain clearance of the body 110 of the self-walking device 100. Whether the obstacle is a passable obstacle may alternatively be determined based on the image information of the obstacle, for example, determined by analyzing the image information of the obstacle. Specifically, for example, a convolutional neural network is used to process the image information of the obstacle, thereby determining the type of the obstacle. If it is determined that the obstacle is a doorsill, the carpet edge, or the like, the obstacle is determined as a passable obstacle.

The above lists several manners of determining whether the obstacle is a passable obstacle. However, the embodiments of the present disclosure are not limited thereto. For example, the determining may alternatively be performed by comprehensively considering and analyzing the structured light point cloud information, the laser ranging information, and the image information of the obstacle.

After it is determined whether the obstacle is a passable obstacle, if the obstacle is a passable obstacle and the passable obstacle is located at the boundary of the travelled region reached by the self-walking device in the current task, the side that is facing away from the travelled region of the obstacle is determined as the candidate region. In this way, the passable obstacle is located at a junction of the travelled region and the candidate region, and the self-walking device 100 may enter the candidate region through the passable obstacle.

In some embodiments, in step S220, determining the candidate region includes: determining the candidate region based on data information, the data information including data information of a historical task recorded by the self-walking device, and the data information of the historical task including historical map information and/or historical navigation information; and in response to determining, based on the data information of the historical task, that a travelled region reached in the current task does not include one or more partial regions of regions reached in the historical task, determining the one or more partial regions as candidate regions.

Specifically, the self-walking device stores data information of an operation task when performing each cleaning operation. The data information of the operation task includes map information and navigation information of a travel region of the self-walking device. The map information presents a region that can be cleaned by the self-walking device. The navigation information presents a path along which the self-walking device performs the cleaning operation.

After the self-walking device 100 completes the cleaning operation in the collision-avoiding mode, the region that has been cleaned by the self-walking device 100 is a travelled region, and the self-walking device 100 determines whether the travelled region reached in the current task includes one or more partial regions of regions reached in the historical task. If the self-walking device 100 determines that the travelled region reached in the current task does not include one or more partial regions of regions reached in the historical task, the one or more partial regions are determined as candidate regions.

The foregoing embodiments list manners of determining the candidate region based on the environmental data information acquired by the self-walking device during the completion of the current task and determining the candidate region based on the data information that is of the historical task and that is recorded by the self-walking device. This is not specifically limited in the present disclosure. The candidate region may alternatively be comprehensively determined through a combination of the foregoing two manners.

In some embodiments, in step 240, determining whether the reachable position adjacent to the candidate region exists includes: determining an adjoining portion, which adjoins the candidate region, of the travelled region, and determining the adjoining portion as the reachable position in response to a junction of the adjoining portion and the candidate region having only the passable obstacle.

Specifically, the following is determined first: whether the travelled region that has been cleaned by the self-walking device 100 in the current task adjoins the previously determined candidate region, that is, whether the travelled region has an adjoining portion adjoining the candidate region. If the travelled region has no adjoining portion adjoining the candidate region, it is impossible for the self-walking device 100 to enter a candidate region from the travelled region. In this case, the self-walking device 100 is controlled to give up entering the candidate region, that is, to skip cleaning of the candidate region.

If the travelled region has the adjoining portion adjoining the candidate region, it is further determined whether there is only the passable obstacle at the junction of the adjoining portion and the candidate region. If there is no passable obstacle at the junction of the adjoining portion and the candidate region, or there are both the passable obstacle and an impassable obstacle at the junction, the self-walking device 100 cannot enter the candidate region from the travelled region. In this case, the self-walking device 100 is controlled to give up entering the candidate region, that is, to skip cleaning of the candidate region. If there is only the passable obstacle at the junction of the adjoining portion and the candidate region, and there is no impassable obstacle at the junction, the self-walking device 100 may attempt to enter the candidate region from the adjoining portion to perform a supplementary cleaning operation, and the adjoining portion may serve as the reachable position.

In some embodiments, in step S260, controlling the self-walking device to reach the reachable position and controlling the self-walking device to attempt to enter the candidate region includes:
ignoring the passable obstacle at the junction of the reachable position and the candidate region, and controlling the self-walking device to pass the junction of the reachable position and the candidate region and to travel towards the candidate region.

Specifically, the passable obstacle at the junction of the reachable position and the candidate region is ignored when the self-walking device 100 is controlled to attempt to enter the candidate region. For example, data information corresponding to the passable obstacle and being collected by the self-walking device 100, such as structured light point cloud information of the passable obstacle, is ignored. In this case, the self-walking device 100 may pass, in the collision-avoiding mode, the junction of the reachable position and the candidate region and travel towards the candidate region. In some embodiments, the self-walking device 100 is controlled to exit the collision-avoiding mode, thereby allowing the self-walking device 100 to directly pass the junction of the reachable position and the candidate travel region, and to travel towards the candidate region.

If the self-walking device 100 successfully enters the candidate region, the self-walking device 100 performs a supplementary cleaning operation in the supplemented travel region. If the self-walking device 100 fails to enter the candidate region, it is determined that the self-walking device 100 cannot enter the supplemented travel region from the travelled region. In this case, the self-walking device 100 is controlled to give up entering the candidate region, that is, to skip cleaning of the candidate region.

In some embodiments, considering that, due to various factors such as a travel speed, driving power, and the like of the self-walking device 100, the self-walking device 100 may fail to enter the candidate region from a reachable position in one attempt when attempting to enter the candidate region, for the same reachable position the self-walking device 100 may perform a plurality of attempt operations. In some embodiments, a success rate that the self-walking device 100 enters the candidate region can increase by increasing the driving power of the self-walking device 100.

In some embodiments, there may be one or more reachable positions, and the self-walking device 100 may attempt to enter the candidate region from any one of the reachable positions. In some embodiments, the self-walking device 100 may sort the reachable positions based on distances between the self-walking device 100 and the reachable positions. For example, there are M reachable positions, namely a first reachable position, a second reachable position, ..., and an M^{th} reachable position. Distances between the self-walking device 100 and the first reachable position, the second reachable position, ..., and the M^{th} reachable position increase sequentially. The self-walking device 100 may select the first reachable position that is closest to the self-walking device 100, and then attempt to enter the candidate region therefrom. If the self-walking device 100 cannot enter the candidate region from the first reachable position after an attempt, the self-walking device 100 selects the second reachable position and then attempts to enter the candidate region therefrom. If the self-walking device 100 cannot enter the candidate region from the second reachable position after an attempt, the self-walking device 100 selects the third reachable position and then attempts to enter the candidate region therefrom. The foregoing attempt operations traverse the M reachable positions until the self-walking device 100 successfully enters the candidate region.

In the navigation method in the embodiments of the present disclosure, a supplementary to-be-swept region can be detected based on environmental data information and/or data information of a historical task; and then whether the supplementary to-be-swept region is reachable is determined. This provides reference for a subsequent sweeping operation, thereby increasing sweeping coverage.

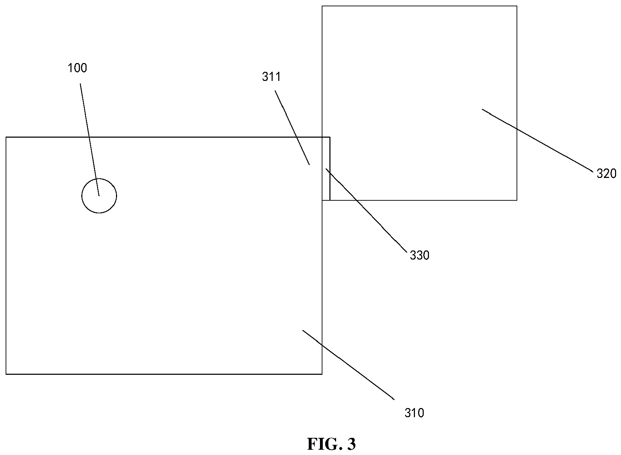

In some embodiments, FIG. 3 is a scenario diagram of a navigation method applied to a self-walking device according to some embodiments of the present disclosure. As shown in FIG. 3, the self-walking device 100, for example a sweeping robot, starts a cleaning operation in a living room 310. The self-walking device 100 uses a collision-avoiding mode when performing the cleaning operation. When detecting a doorsill 330, the self-walking device 100 regards the doorsill 330 as an obstacle and performs an obstacle-avoiding operation. As a result, the self-walking device 100 cannot pass the doorsill 330 and enter a bedroom 320 to perform the cleaning operation. After the self-walking device 100 completes the cleaning operation in the living room 310, for this cleaning operation the living room 310 is a travelled region, the doorsill 330 is a passable obstacle, the bedroom 320 is a to-be-cleaned region, and a region 311, which adjoins the doorsill 330 of the living room 310, is a reachable region.

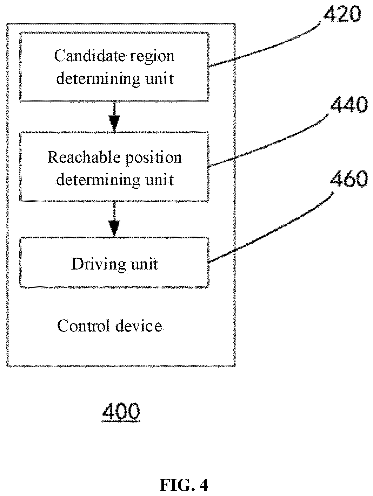

An embodiment of the present disclosure further provides a navigation device for a self-walking device, for example a sweeping robot. Various units execute method steps described in the foregoing embodiments, and the same method steps have the same technical effects, which are not described herein. FIG. 4 is a schematic diagram of a navigation device of a self-walking device according to some embodiments of the present disclosure. As shown in FIG. 4, the navigation device 400 specifically includes:
a candidate region determining unit 420 configured to determine a candidate region after a current task is completed;
a reachable position determining unit 440 configured to determine whether a reachable position adjacent to the candidate region exists; and
a control unit 460 configured to control, in response to an existence of the reachable position adjacent to the candidate region, the self-walking device to reach the reachable position, and control the self-walking device to attempt to enter the candidate region to operate in the candidate region.

In some embodiments, the control unit 460 is further configured to: control, in response to an absence of the reachable position adjacent to the candidate region, the self-walking device to give up entering the candidate region.

In some embodiments, determining the candidate region includes: determining the candidate region based on data information, the data information including environmental data information acquired by the self-walking device during a completion of the current task, wherein the environmental data information includes, for example, at least one or any combination of structured light point cloud information, laser ranging information, and image information. The candidate region determining unit 440 is configured to: in response to determining, based on the acquired environmental data information, that an obstacle is a passable obstacle, for example, a doorsill and/or a carpet edge, and that the obstacle is located at a boundary of a travelled region reached by the self-walking device in the current task, determine a side, facing away from the travelled region, of the obstacle as the candidate region.

In some embodiments, determining the candidate region includes: determining the candidate region based on data information, the data information including data information of a historical task recorded by the self-walking device, and the data information of the historical task including historical map information and/or historical navigation information. The candidate region determining unit 440 is configured to: in response to determining, based on the data information of the historical task, that a travelled region reached in the current task does not include one or more partial regions of regions reached in the historical task, determine the one or more partial regions as candidate regions.

In some embodiments, the reachable position determining unit 440 is configured to: determine an adjoining portion, which adjoins the candidate region, of the travelled region, and determine, in response to a junction of the adjoining portion and the candidate region having only the passable obstacle, the adjoining portion as the reachable position.

In some embodiments, the control unit 460 is configured to: ignore the passable obstacle at the junction of the reachable position and the candidate region and control the self-walking device to pass the junction of the reachable position and the candidate region and to travel towards the candidate region.

In some embodiments, there are a plurality of reachable positions; and the control unit 460 is configured to: select a reachable position according to a predetermined order and control the self-walking device to attempt to enter the candidate region.

When the navigation device in the embodiments of the present disclosure is used for navigation control of the self-walking device, a supplementary to-be-swept region can be detected based on environmental data information and/or data information of the historical task; then, whether the supplementary to-be-swept region is reachable can be determined. This provides reference for a subsequent sweeping operation, thereby increasing sweeping coverage.

An embodiment of the present disclosure provides a non-transitory computer-readable storage medium, storing a computer program instruction. When the computer program instruction is invoked and executed by a processor, the steps of any one of the above methods are implemented.

An embodiment of the present disclosure provides a self-walking device 100, for example a sweeping robot. The self-walking device 100 includes a processor and a memory. The memory stores a computer program instruction executable by the processor. When the computer program instruction is executed by the processor, the steps of the method according to any one of the foregoing embodiments are implemented.

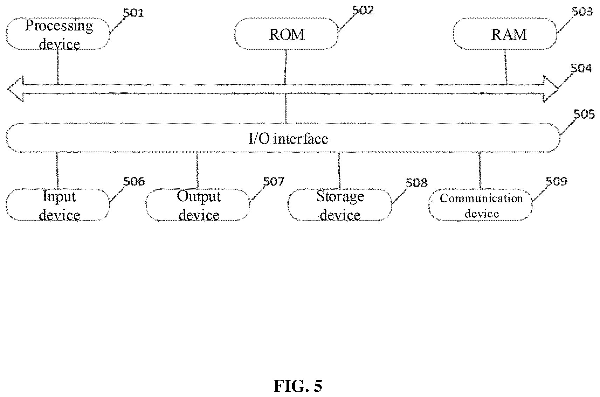

FIG. 5 is a schematic diagram of an electronic structure of a self-walking device according to some embodiments of the present disclosure. As shown in FIG. 5, the self-walking device may include a processing device (such as a central processing unit or a graphics processing unit) 501 that may perform various appropriate actions and processing according to a program stored in a read-only memory (ROM) 502 or a program loaded from a storage device 508 into a random-access memory (RAM) 503. In the RAM 503, various programs and data required for operation of an electronic robot are further stored. The processing device 501, the ROM 502, and the RAM 503 are connected to one another via a bus 504. An input/output (I/O) interface 505 is also connected to the bus 504.

Generally, the following devices may be connected to the I/O interface 505: input devices 506 including, for example, a touchscreen, a touchpad, a keyboard, a mouse, a camera, a microphone, an accelerometer, and a gyroscope; output devices 507 including, for example, a liquid crystal display (LCD), a loudspeaker and a vibrator; storage devices 508 including, for example, a hard disk; and a communication device 509. The communications device 509 may allow the self-walking device to be in wireless or wired communication with another device to exchange data. Although FIG. 5 shows a self-walking device with various devices, it should be understood that it is not required to implement or provide all shown devices. Alternatively, more or fewer devices may be implemented or provided.

Flowcharts and block diagrams in the accompanying drawings illustrate possible architectures, functions, and operations of systems, methods, and computer program products according to various embodiments of the present disclosure. In this regard, each block in a flowchart or a block diagram may represent a module, a program segment, or part of a code that includes one or more executable instructions for implementing a specified logical function. It should also be noted that in some alternative implementations, functions marked in the block may also occur in a different order than those marked in the accompanying drawings. For example, two blocks represented in succession may actually be executed substantially in parallel, and they may sometimes be executed in a reverse order, depending on the functions involved. It should also be noted that each block in the block diagram and/or the flowchart and a combination of blocks in the block diagram and/or the flowchart may be implemented by using a dedicated hardware-based system that performs a specified function or operation, or may be implemented by using a combination of dedicated hardware and a computer instruction.

Finally, it should be noted that various embodiments in the Description are described in a progressive manner, that each embodiment focuses on the differences from other embodiments, and that the same or similar parts among the various embodiments may refer to one another. For the system or the device disclosed in the embodiments, since the system or the device corresponds to the method disclosed in the embodiment, the description is relatively simple, and the relevant parts may refer to the description of the method part.

The above embodiments are only used to illustrate the technical solutions of the present disclosure and are not intended to limit the present disclosure. Although the present disclosure has been described in detail in reference to the foregoing embodiments, those of ordinary skill in the art should understand that they can still make modifications to the technical solutions described in the foregoing embodiments or make equivalent substitutions to part of the technical features, and that these modifications or substitutions do not make the essence of the corresponding technical solutions deviate from the spirit and scope of the technical solutions of the various embodiments of the present disclosure.

## Claims

1. A navigation method, applied to a self-walking device, the method comprising:
determining a candidate region after a current task is completed;
determining whether a reachable position adjacent to the candidate region exists; and
controlling, in response to an existence of the reachable position adjacent to the candidate region, the self-walking device to reach the reachable position, and controlling the self-walking device to attempt to enter the candidate region to operate in the candidate region.

2. The navigation method according to claim 1, further comprising:
controlling, in response to an absence of the reachable position adjacent to the candidate region, the self-walking device to give up entering the candidate region.

3. The navigation method according to claim 1, wherein determining the candidate region comprises:
determining the candidate region based on data information, the data information comprising environmental data information acquired by the self-walking device during a completion of the current task; and
in response to determining, based on the acquired environmental data information, that an obstacle is a passable obstacle and that the obstacle is located at a boundary of a travelled region reached by the self-walking device in the current task, determining a side, facing away from the travelled region, of the obstacle as the candidate region.

4. The navigation method according to claim 3, wherein
the environmental data information comprises at least one or any combination of: structured light point cloud information, laser ranging information, and image information.

5. The navigation method according to claim 1, wherein determining the candidate region comprises:
determining the candidate region based on data information, the data information comprising data information of a historical task recorded by the self-walking device, and the data information of the historical task comprising historical map information and/or historical navigation information; and
in response to determining, based on the data information of the historical task, that a travelled region reached in the current task does not comprise one or more partial regions of regions reached in the historical task, determining the one or more partial regions as candidate regions.

6. The navigation method according to claim 3 or 5, wherein determining whether the reachable position adjacent to the candidate region exists comprises:
determining an adjoining portion, which adjoins the candidate region, of the travelled region, and determining, in response to a junction of the adjoining portion and the candidate region having only the passable obstacle, the adjoining portion as the reachable position.

7. The navigation method according to claim 6, wherein controlling the self-walking device to reach the reachable position and controlling the self-walking device to attempt to enter the candidate region comprises:
ignoring the passable obstacle at the junction of the reachable position and the candidate region, and controlling the self-walking device to pass the junction of the reachable position and the candidate region and to travel towards the candidate region.

8. The navigation method according to claim 3, wherein the passable obstacle comprises a doorsill and/or a carpet edge.

9. The navigation method according to claim 1, further comprising:
selecting, in response to an existence of a plurality of reachable positions, a reachable position according to a predetermined order, and controlling the self-walking device to attempt to enter the candidate region.

10. A navigation device, applied to a self-walking device, the device comprising:
a candidate region determining unit configured to determine a candidate region after the self-walking device completes a current task;
a reachable position determining unit configured to determine whether a reachable position adjacent to the candidate region exists; and
a control unit configured to control, in response to an existence of the reachable position adjacent to the candidate region, the self-walking device to reach the reachable position, and control the self-walking device to attempt to enter the candidate region to operate in the candidate region.

11. The navigation device according to claim 10, wherein the control unit is further configured to:
control, in response to an absence of the reachable position adjacent to the candidate region, the self-walking device to give up entering the candidate region.

12. The navigation device according to claim 10, wherein determining the candidate region comprises:
determining the candidate region based on data information, the data information comprising environmental data information acquired by the self-walking device during a completion of the current task; and
wherein the candidate region determining unit is configured to:
in response to determining, based on the acquired environmental data information, that an obstacle is a passable obstacle and that the obstacle is located at a boundary of a travelled region reached by the self-walking device in the current task, determine a side, facing away from the travelled region, of the obstacle as the candidate region.

13. The navigation device according to claim 12, wherein the environmental data information comprises at least one or any combination of: structured light point cloud information, laser ranging information, and image information.

14. The navigation device according to claim 10, wherein determining the candidate region comprises:
determining the candidate region based on data information, the data information comprising data information of a historical task recorded by the self-walking device, and the data information of the historical task comprising historical map information and/or historical navigation information; and
wherein the candidate region determining unit is configured to:
in response to determining, based on the data information of the historical task, that a travelled region reached in the current task does not comprise one or more partial regions of regions reached in the historical task, determine the one or more partial regions as candidate regions.

15. The navigation device according to claim 12 or 14, wherein the reachable position determining unit is configured to:
determine an adjoining portion, which adjoins the candidate region, of the travelled region, and determine, in response to a junction of the adjoining portion and the candidate region having only the passable obstacle, the adjoining portion as the reachable position.

16. The navigation device according to claim 15, wherein the control unit is configured to:
ignore the passable obstacle at the junction of the reachable position and the candidate region, and control the self-walking device to pass the junction of the reachable position and the candidate region and to travel towards the candidate region.

17. The navigation device according to claim 12, wherein the passable obstacle comprises a doorsill and/or a carpet edge.

18. The navigation device according to claim 10, wherein in response to an existence of a plurality of reachable positions, the control unit is configured to:
select a reachable position according to a predetermined order, and control the self-walking device to attempt to enter the candidate region.

19. A self-walking device, comprising:
a processor, and
a memory, wherein
the memory stores a computer program instruction executable by the processor, and the processer, when executing the computer program instruction, implements steps of the method according to any one of the claims 1 to 9.

20. A non-transitory computer-readable storage medium, storing a computer program instruction, the computer program instruction, when invoked and executed by a processor, causing the processor to implement steps of the method according to any one of the claims 1 to 9.
